# EUROPEAN PATENT SPECIFICATION

(11) **EP 3 987 754 B1**
(45) Date of publication and mention of the grant of the patent: **24.07.2024**
(21) Application number: 19935610.6
(22) Date of filing: 24.06.2019
(51) Int. Cl.: H04B 1/3827, A42B 3/30, H04R 1/10

(54) **HELMET-MOUNTED RADIO ASSEMBLY WITH EXTENDED CONTROLS**
AM HELM MONTIERTE FUNKANORDNUNG MIT ERWEITERTEN STEUERUNGEN
ENSEMBLE RADIO MONTÉ SUR CASQUE AVEC DES COMMANDES ÉTENDUES

(43) Date of publication of application: 27.04.2022
(73) Proprietor: Florez, Otoniel, Plantation FL 33325 (US)
(72) Inventor: Florez, Otoniel, Plantation FL 33325 (US)
(74) Representative: Urizar Anasagasti, Jesus Maria
(86) International application number: PCT/US2019/038760
(87) International publication number: WO 2020/263220

(56) References cited:
- WO-A1-94/02043
- US-A- 4 357 711
- US-A- 4 357 711
- US-A- 4 607 395
- US-A- 4 607 395
- US-A1- 2014 192 996
- US-A1- 2015 080 061
- US-A1- 2018 289 095

## Description

### II. BACKGROUND OF THE INVENTION

### 1. Field of the Invention.

The present disclosure generally relates to a two-way radio device for communication, and more particularly to a two-way radio device adapted to be removably mounted to a helmet and having extended controls for convenient use of a user.

### 2. Description of the Related Art.

Many jobs require constant communication among the workers on worksite. Sometimes, these jobs may need to be performed in noisy and dangerous environments. For example, mine workers need to work at different locations of a mine site in harsh conditions amid constant background noise. Similarly, construction workers need to work at different locations of a work site under noise of construction equipment. In such work environments, it may not be possible for co-workers to directly communicate, at a distance, instructions to each other. That said, effective and reliable communication among co-workers in such environments is very important for safe operations.

Traditionally, electronic devices like two-way radios have been used for communication between workers in such situations. It is to note that these types of work environments demand physical activity which may require involvement of both hands of the workers. Thus, a worker may not be left with any spare hand to handle and manipulate the standalone radio device effectively. Moreover, the worker is usually required to wear large and bulky gloves in such environments. Therefore, it would be cumbersome for the worker to be able to properly manipulate the radio device (i.e. operate the various buttons on the radio device), especially because the buttons on the radio device are typically small in size.

Some solutions have been provided in the art to this problem. Since, these kind of work environments usually require the worker to wear hear-gear, like hard helmets for safety purposes; some equipment manufacturers have fitted the radio devices on the helmet itself. Usually, an earpiece or the like extend from the radio mounted on the helmet to be inserted by the worker into his/her ear for listening to the communication on the selected channel, and further speak into the microphone thereof.

WO 2002087282A1 (hereinafter, the '282 publication) discloses a communications system attached to a helmet using a resilient clip adapted to use spring forces to elastically and removably grasp the lower peripheral rim of the helmet. Rigidly fixed to the resilient clip is a junction box. A microphone and speakers are attached to the helmet and are electrically connected to a transceiver through the junction box. However, the '282 publication still does not provide any convenient means for controlling the communication system attached to the helmet therein. US 4,607,395 also discloses a helmet with a two-way radio, having an easily accessible rotatable volume control knob.

The known solutions in the prior-art still suffers from the problem of providing some convenient means for manipulating the radio device, such as changing the channel frequency, or controlling the volume of the radio device. Due to the radio device being mounted on top of the helmet, the worker would have to fiddle around to guess the exact location of the controls on the radio device; and sometimes may even accidently manipulate some wrong control button/dial which could possibly lead to communication blackout and be potentially dangerous to the safety of the worker.

### III. SUMMARY OF THE INVENTION

It is one of the objectives of the present invention to provide a helmet-mounted radio assembly having a radio device removably mounted on a helmet.

It is another objective of the present invention to provide a helmet-mounted radio assembly with reliable means for mounting of the radio device to the helmet.

It is yet another objective of the present invention to provide a helmet-mounted radio assembly with the radio device having extended controls for ergonomic use.

Further objects of the invention will be brought out in the following part of the specification, wherein detailed description is for the purpose of fully disclosing the invention without placing any limitations thereon.

### IV. BRIEF DESCRIPTION OF THE DRAWINGS

With the above and other related objects in view, the invention consists in the details of construction and combination of parts as will be more fully understood from the following description, when read in conjunction with the accompanying drawings in which:
**Figure 1** illustrates a diagrammatic view of a radio device **100** with extended controls **110**, in accordance with one or more embodiments of the present disclosure; and
**Figure 2** illustrates a schematic block diagram of the radio device **100** with extended controls **110**, in accordance with one or more embodiments of the present disclosure.
**Figure 3** illustrates a diagrammatic view of a helmet-mounted radio assembly **200** with mounting arrangement **300**, in accordance with one embodiment of the present disclosure.
**Figure 4** illustrates a diagrammatic view of a helmet-mounted radio assembly **200** with mounting arrangement **400**, in accordance with another embodiment of the present disclosure.

### V. DETAILED DESCRIPTION OF THE EMBODIMENTS OF THE INVENTION

Illustrative embodiments of the present invention are described below. The following explanation provides specific details for a thorough understanding of and enabling description for these embodiments. One skilled in the art will understand that the invention may be practiced without such details. In some instances, well-known structures, processes and functions have not been shown or described in detail to avoid unnecessarily obscuring the description of the embodiments.

It shall be noted that unless the context clearly requires otherwise, throughout the description, the words "comprise," "comprising," "include," "including," and the like are to be construed in an inclusive sense as opposed to an exclusive or exhaustive sense; that is to say, in the sense of "including, but not limited to." Words using the singular or plural number also include the plural or singular number, respectively while adhering to the concepts of the present invention. Furthermore, references to "one embodiment" and "an embodiment" are not intended to be interpreted as excluding the existence of additional embodiments that also incorporate the recited features.

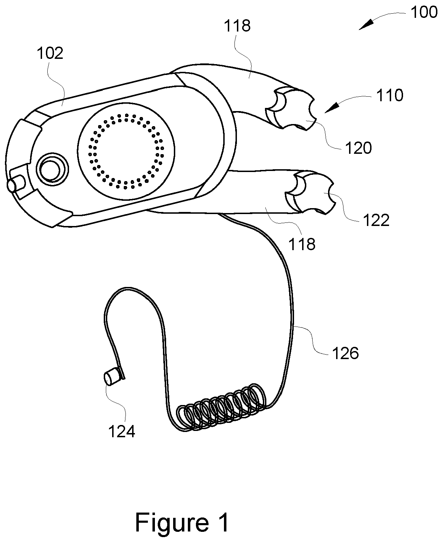

Referring now to the drawings, **Figure 1** illustrates a diagrammatic view of a radio device **100**, in accordance with one or more embodiments of the present disclosure. The radio device **100** may be any short range wireless communication device which can be used for simple yet effective communication between people, such as co-workers in a worksite. The radio device **100** has the advantage that it is not reliant on transmission towers to be in the area, and thus can be used as a reliable means for communication in remote and difficult work environments, such as a mining facility, construction site, etc. The radio device **100** is generally in the form of a "control box" with means for controlling communication, and the two terms have been interchangeably used hereinafter without any limitations.

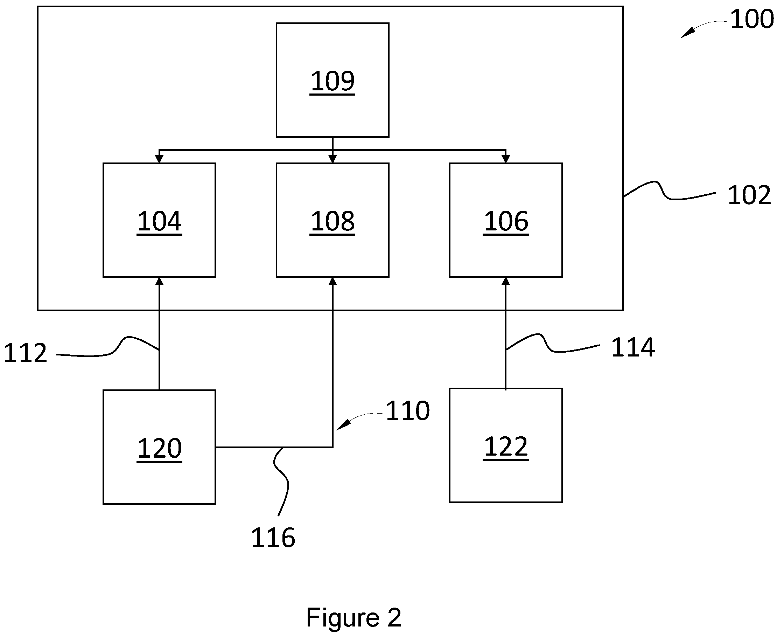

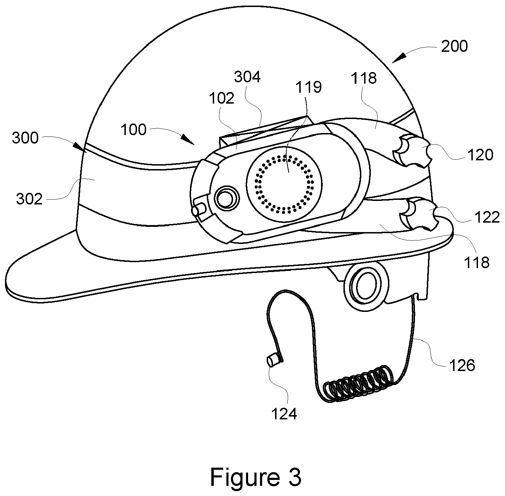

The radio device **100** includes a body **102** to house various components therein, such as conventional speaker elements (not illustrated) and circuitry. **Figure 2** illustrates a schematic block diagram of the radio device **100** of the present disclosure. As schematically illustrated, the radio device **100** includes multiple circuits to control various functions thereof. For example, the radio device **100** includes a volume microchip **104** configured to control output volume of the radio device **100**, as per instructions from the user. The radio device **100** also includes a channel microchip **106** configured to select the connecting channel frequency of the radio device **100**, as per instructions from the user. Further, the radio device **100** includes an on/off microchip **108** configured to switch ON and OFF the radio device **100**, as per instructions from the user. In the radio device **100**, the volume microchip **104**, the channel microchip **106** and the on/off microchip **108** are generally located inside the body **102** of the radio device **100.** The radio device **100** may further include a battery **109** for powering the various components thereof. **Figure 3** shows pushbutton **119** known in the art to turn on a microphone. Pushbutton **119** is pressed prior to a user speaking into headphone/microphone combination **124** or a stand alone microphone.

It may be understood that a traditional radio device includes different types of controls associated with its multiple microchips for controlling various functions thereof. These controls are typically provided on an outer surface of a body of the traditional radio device. Referring to **Figures 1** **and** **2** in combination, the radio device **100** includes extended controls **110** for controlling various functions thereof, in accordance with one or more embodiments of the present disclosure. The said extended controls **110** are located outside of the body **102** of the radio device **100.** For this purpose, the radio device **100** includes at least one extension member. In the present embodiments, as illustrated in **Figure 2**, the radio device **100** includes multiple extension members, namely a first extension **112** electrically connected to the volume microchip **104** and the second extension **114** electrically connected to the channel microchip **106.** Further, the radio device **100** may include a third extension **116** which may be connected to the on/off microchip **108.**

In an embodiment, the extensions **112**, **114** and **116** include signal conducting wires extending from inside of the body **102** of the radio device **100.** In particular, these extensions **112**, **114** and **116** are respectively connected to the volume microchip **104**, the channel microchip **106** and the on/off microchip **108** inside the body **102.** In some examples, the extensions **112**, **114** and **116** may be in the form of computer bus cables which are adapted to be utilized for transferring data as well as voltage signals. As may be contemplated from **Figure 1**, the extensions **112, 114** and **116** are covered in sheath layers **118** in order to be protected from physical damage as well as electronic interference. In an embodiment, the third extension **116** may be paired with either one of the first extension **112** or the second extension **114** inside the corresponding sheath layer **118.** In the illustrated example of **Figure 2**, the third extension **116** has been shown to be paired with the first extension 11**2**, in the radio device **100.**

In an embodiment, the extended controls **110** include controls connected to the distal end of the extensions for sending instructions to the correspondingly connected microchip therewith. For example, the first extension **112** has a volume dial **120** electrically connected at the distal end thereof, and the second extension **114** has a channel dial **122** electrically connected at the distal end thereof. Further, the third extension **116** may also be electrically connected to the volume dial **120** at the distal end thereof. It may be understood that the volume dial **120**, connected to the volume microchip **104**, can be used to regulate the output volume of the radio device **100.** That is, a user by turning the volume dial **120** in one direction, say clockwise direction, can increase the output volume of the radio device **100**; and by turning the volume dial **120** in opposite direction, i.e. the anti-clockwise direction, can decrease the output volume of the radio device **100.** Similarly, the channel dial **122**, connected to the channel microchip **106**, can be used to regulate the connecting channel frequency of the radio device **100.** That is, a user by turning the channel dial **122** in one direction, say clockwise direction, can increase the connecting channel frequency of the radio device **100**; and by turning the channel dial **122** in opposite direction, i.e. the anti-clockwise direction, can decrease the connecting channel frequency of the radio device **100.** In an embodiment, the volume dial **120** may also be used for switching ON and OFF the radio device **100.** For this purpose, when the volume dial **120** is turned all the way back in one direction, say the anti-clockwise direction, to its initial position, the volume dial **120** sends a signal to the on/off microchip **108** via the third extension **116** to switch OFF the radio device **100**; and when the volume dial **120** is turned a bit in opposite direction, i.e. the clockwise direction, the volume dial **120** sends a signal to the on/off microchip **108** via the third extension **116** to switch ON the radio device **100.** It may be contemplated that alternatively the third extension **116** may be connected to the channel dial **122**; and, in such case, the channel dial **122** may be utilized for the purpose of switching ON and OFF the radio device **100.**

In addition, the radio device **100** may optionally be connected with a headphone/microphone **124** for listening to the communication from the radio device **100.** As illustrated in **Figure 1**, the headphone/microphone **124** is extending outwardly of the body **102** by means of a wire **126.** The wire **126** has been shown to be a coiled wire; however, in other examples, the wire **126** may be a non-coiled wire without any limitations. As may be contemplated by a person skilled in the art, the headphone/microphone **124** may be inserted by the user in his/her ear to listen to the communication from the radio device **100.**

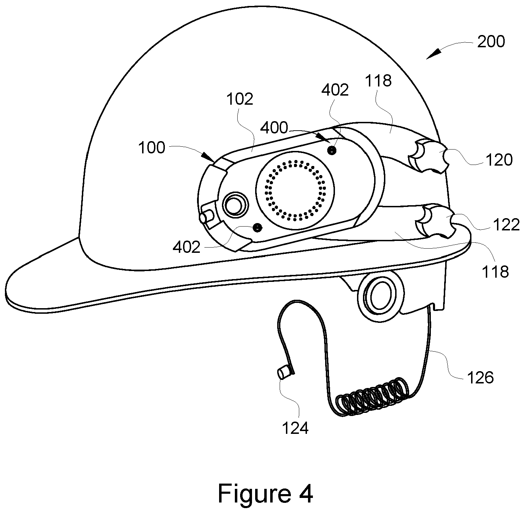

Referring now to **Figures 3** **and** **4**, a helmet-mounted radio assembly **200** is shown, in accordance with an embodiment of the present disclosure. The helmet-mounted radio assembly **200** includes a helmet **202** to which the radio device **100** is mounted. For mounting the radio device **100** to the helmet **202**, the helmet-mounted radio assembly **200** includes mounting members. In one embodiment, as illustrated in **Figure 3**, the helmet-mounted radio assembly **200** includes a mounting arrangement **300** having a band **302** wrapped around and supported on the outer surface of the helmet **202.** Further, the mounting arrangement **300** includes a clip **304** attached to a back side of the body **102** of the radio device **100.** As may be contemplated, the clip **304** can be used to engage with the band **302** for mounting the radio device **100** to the helmet 202, in the helmet-mounted radio assembly **200.** In another embodiment, as illustrated in **Figure 4**, the helmet-mounted radio assembly **200** may utilize a mounting arrangement **400** using screws **402** as mounting member for mounting the radio device **100** to the helmet **202.** In yet another embodiment, the helmet-mounted radio assembly **200** may include a carriage (not shown) fixed or adhered to the helmet **202**, and the carriage in turn may support the radio device **100** therein. In some embodiments, the helmet-mounted radio assembly **200** may include one or more solar panels (not shown) fixed to the outer surface of the helmet **200** to generate electric power and electrically connected to the battery **109** of the radio device **100.** The generated power could charge the battery **109** to in turn be used for powering the radio device **100.**

Conventional radio device includes volume controls and channel controls provided on the body thereof. Such controls are, typically, in the form of small buttons or dials which may not be easily accessible by a user wearing gloves or the like, especially when the radio device is mounted on a helmet and not in direct sight of the user. Thus, the user may have to fiddle around to find the right button or dial which is cumbersome. With the extended controls **110** in the radio device **100** of the present disclosure, the user can easily locate the right control dials for controlling the desired function of the radio device **100.** Further, given the expected use of the radio device 10 in outdoor environments, the sheath layers **118** provides waterproof and dustproof arrangement for the extended controls **110.** It may be understood that the radio device **100** may be arranged in any manner in the helmet-mounted radio assembly **200** in order for the dials **120** and **122** to be within easy approach of the user. For instance, the radio device **100** may be oriented such that the extended controls **110** may be hanging in downward direction for the dials **120** and **122** to be in relative proximity to the user. With the helmet-mounted radio assembly **200** of the present disclosure, the radio device **100** doesn't interfere with work to be performed by the user. The radio device **100** may be completely unobtrusive in that it may be positioned inside or on the helmet **202** or other headgear of the user.

The foregoing description conveys the best understanding of the objectives and advantages of the present invention. Different embodiments may be made of the inventive concept of this invention. It is to be understood that all matter disclosed herein is to be interpreted merely as illustrative, and not in a limiting sense.

### VI. INDUSTRIAL APPLICABILITY

The present invention's industrial applicability includes a helmet-mounted radio assembly with extended controls. The helmet-mounted radio assembly further includes a radio device removably mounted on a helmet. The present invention utilizes reliable mounting arrangements, such as bands, clips, screws or other suitable means, in order to removably mount the radio device to the helmet. The radio device includes extensions for controlling various functions thereof. Thus, a user can have extended controls ergonomically located within easy reach thereof for controlling the regular functions of the radio device, like volume control, changing channel frequency, or switching the radio device on or off.

## Claims

1. A helmet (202), comprising: a two-way radio (100) mounted thereon having a circumference, **characterized by** two extensions (112, 114) extending away from said two-way radio (100), each extension having a knob at its distal end, a first knob (122) connected to a channel microchip (106), a second knol (120) connected to an on and off microchip (108), said second knob (120) also connected to a volume microchip (104), a battery (109) used to power said first, second and third microchips (104, 106, 108) ; said first and second knobs (120, 122) are located entirely outside said circumference.

2. The helmet of claim 1 wherein said two-way radio (100) is rotably mounted to a third extension (116) having a distal end, a third knob at said distal end, said third knob connected to said volume or on and off microchip.

3. The helmet of claim 1 wherein said two-way radio (100) includes sheath layers (118) adapted to protect said body from physical damage and electronic interference.

4. The helmet of claim 1 wherein a microphone and headphone combination unit (124) are mounted to said two-way radio (100) using a wire (126).

5. The helmet of claim 1 wherein, a pushbutton (119) is located on said two-way radio (100) and is adapted to turn on said microphone.

6. The helmet of claim 1 having a band (302) that extends around said helmet, said band (302) used to mount said two-way radio (100) to said helmet.

7. The helmet of claim 1 wherein said helmet includes a front end and a rear end, said two extensions (112, 114) both extend towards said rear end.

## Patentansprüche

1. Helm (202), Folgendes umfassend:
ein daran montiertes Zwei-Wege-Funkgerät (100) mit einem Umfang, **gekennzeichnet durch** zwei Verlängerungen (112, 114), die sich von dem Zwei-Wege-Funkgerät (100) weg erstrecken, wobei jede Verlängerung einen Knopf an ihrem distalen Ende aufweist, wobei ein erster Knopf (122) mit einem Kanal-Mikrochip (106) verbunden ist, wobei ein zweiter Knopf (120) mit einem Ein- und Aus-Mikrochip (108) verbunden ist, wobei der zweite Knopf (120) auch mit einem Lautstärke-Mikrochip (104) verbunden ist, eine Batterie (109), die zum Versorgen des ersten, zweiten und dritten Mikrochips (104, 106, 108) verwendet wird; wobei der erste und der zweite Knopf (120, 122) vollständig außerhalb des Umfangs lokalisiert sind.

2. Helm nach Anspruch 1, wobei das Zwei-Wege-Funkgerät (100) drehbar an einer dritten Verlängerung (116) montiert ist, die ein distales Ende und einen dritten Knopf an dem distalen Ende aufweist, wobei der dritte Knopf mit dem Lautstärke- oder Ein- und Aus-Mikrochip verbunden ist.

3. Helm nach Anspruch 1, wobei das Zwei-Wege-Funkgerät (100) Hüllschichten (118) einschließt, die geeignet sind, den Körper vor physischen Schäden und elektronischen Störungen zu schützen.

4. Helm nach Anspruch 1, wobei eine Mikrofon- und Kopfhörer-Kombinationseinheit (124) unter Verwendung eines Kabels (126) an dem Zwei-Wege-Funkgerät (100) montiert ist.

5. Helm nach Anspruch 1, wobei ein Druckknopf (119) an dem Zwei-Wege-Funkgerät (100) lokalisiert ist und dazu geeignet ist, das Mikrofon einzuschalten.

6. Helm nach Anspruch 1, der ein Band (302) aufweist, das sich um den Helm herum erstreckt, wobei das Band (302) dazu verwendet wird, das Zwei-Wege-Funkgerät (100) an dem Helm zu montieren.

7. Helm nach Anspruch 1, wobei der Helm ein vorderes Ende und ein hinteres Ende einschließt, wobei die beiden Verlängerungen (112, 114) sich beide in Richtung des hinteren Endes erstrecken.

## Revendications

1. Casque (202), comprenant :
une radio bidirectionnelle (100) montée sur celui-ci ayant une circonférence, **caractérisé par** deux extensions (112, 114) s'étendant à l'opposé de ladite radio bidirectionnelle (100), chaque extension comportant un bouton au niveau de son extrémité distale, un premier bouton (122) connecté à une micropuce de canal (106), un deuxième bouton (120) connecté à une micropuce marche/arrêt (108), ledit deuxième bouton (120) étant également connecté à une micropuce de volume (104), une batterie (109) utilisée pour alimenter lesdites première, deuxième et troisième micropuces (104, 106, 108) ; lesdits premier et deuxième boutons (120, 122) sont situés entièrement à l'extérieur de ladite circonférence.

2. Casque selon la revendication 1, dans lequel ladite radio bidirectionnelle (100) est montée rotative sur une troisième extension (116) ayant une extrémité distale, un troisième bouton au niveau de ladite extrémité distale, ledit troisième bouton étant connecté à ladite micropuce marche et arrêt ou de volume.

3. Casque selon la revendication 1, dans lequel ladite radio bidirectionnelle (100) comporte des couches de gaine (118) conçues pour protéger ledit corps contre les dommages physiques et les interférences électroniques.

4. Casque selon la revendication 1, dans lequel une unité combinée microphone et casque (124) est montée sur ladite radio bidirectionnelle (100) à l'aide d'un fil (126).

5. Casque selon la revendication 1, dans lequel, un bouton-poussoir (119) est situé sur ladite radio bidirectionnelle (100) et est adapté à allumer ledit microphone.

6. Casque selon la revendication 1, ayant une bande (302) qui s'étend autour dudit casque, ladite bande (302) étant utilisée pour monter ladite radio bidirectionnelle (100) sur ledit casque.

7. Casque selon la revendication 1, dans lequel ledit casque comporte une extrémité avant et une extrémité arrière, lesdites deux extensions (112, 114) s'étendent toutes deux vers ladite extrémité arrière.
